# EUROPEAN PATENT APPLICATION

(11) **EP 3 413 128 A1**
(43) Date of publication of application: **12.12.2018**
(21) Application number: 18176842.5
(22) Date of filing: 08.06.2018
(51) Int. Cl.: G03B 17/08, G03B 17/12

(54) **WATERPROOF CAMERA CASE**

(30) Priority: 09.06.2017 CN 201710434517
(71) Applicant: Shanghai Xiaoyi Technology Co., Ltd., Pudong New Area Shanghai 201203 (CN)
(72) Inventor: WANG, Lingyun, Shanghai, 201203 (CN)
(74) Representative: Finnegan Europe LLP

(57) **Abstract**

A waterproof camera case (10) includes a first housing section (20) including a tab protruding from an outer surface of the first housing section (20), the tab including an opening. The camera case also includes a second housing section, at least one of the first and second housing sections including a transparent window (18) or transmitting light to a camera. The camera case (10) further includes a latch assembly configured to couple the first housing section (20) with the second housing section (25) to form a watertight enclosure. The latch assembly includes a shaft (15, 21, 22), a plug (13), and a spring (14). The plug (13) and the spring (14) are placed along the shaft. When the latch assembly is closed, the spring (14) pushes the plug (13) into the opening of the tab, to lock the latch assembly.

## Description

### TECHNICAL FIELD

The present disclosure generally relates to camera system, and more specifically to a waterproof camera case.

### BACKGROUND

Electronic devices including cameras, cell phones, tablet computers, and wearable devices often need to be covered by a case for purpose of protecting the electronic devices from being damaged. For example, digital cameras have become a widely used electronic device. Various models of cameras are available with creative features and designs added and updated to suit the needs of different consumer groups. For example, point-and-shoot cameras, designed for simple operation, are especially intended for amateurs with limited photography experience, and who do not require high performance or capabilities of the device. As another example, action cameras, sometimes called sport cameras, may be used to record high-speed actions.

To expand the usage of the cameras and to satisfy peoples' pursuit of the joy of photography, it is desirable for the cameras to be able to work in various environments, such as under the water. Thus, a waterproof camera case is needed to allow underwater photography. However, conventional camera cases often do not provide robust waterproof protection. For example, although some camera cases are claimed to be waterproof, they can only work in shallow water or light rain. When these camera cases are used in deep water, e.g., 40 meters under the water surface, or surrounded by water for extended time, water leakage can occur and cause damage to the cameras enclosed by the camera cases.

The disclosed systems and methods address one or more of the problems listed above.

### SUMMARY

Consistent with one embodiment of the present disclosure, a camera case is provided. The camera case includes a first housing section including a tab protruding from an outer surface of the first housing section, the tab including an opening. The camera case also includes a second housing section, at least one of the first and second housing sections including a transparent window for transmitting light to a camera. The camera case further includes a latch assembly configured to couple the first housing section with the second housing section to form a watertight enclosure for a camera. The latch assembly includes a shaft, a plug, and a spring. The plug and the spring are placed along the shaft. When the latch assembly is closed, the spring pushes the plug into the opening of the tab, to lock the latch assembly.

It is to be understood that both the foregoing general description and the following detailed description are exemplary and explanatory only and are not restrictive of the invention, as claimed.

### DESCRIPTION OF DRAWINGS

The accompanying drawings, which are incorporated in and constitute a part of this specification, illustrate embodiments consistent with the present disclosure and, together with the description, serve to explain the principles of the present disclosure.

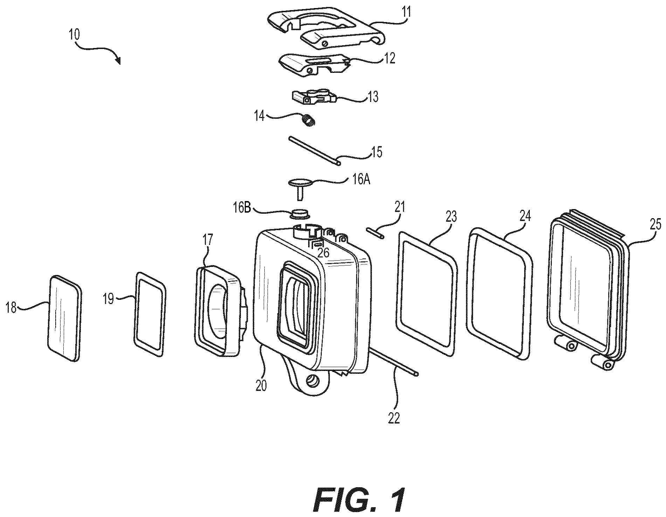

Fig. 1 is a schematic diagram illustrating an exploded structural view of a waterproof camera case, according to an exemplary embodiment.

### DETAILED DESCRIPTION

Reference will now be made in detail to the disclosed embodiments, examples of which are illustrated in the accompanying drawings. Wherever convenient, the same reference numbers will be used throughout the drawings to refer to the same or like parts.

Features and characteristics of the present disclosure, as well as methods of operation and functions of related elements of structure and the combination of parts and economies of manufacture, may become more apparent upon consideration of the following description with reference to the accompanying drawings, all of which forms a part of this specification. It is to be understood, however, that the drawings are for the purpose of illustration and description only and are not intended as a definition of the limits of the invention. As used in the specification and in the claims, the singular form of "a", "an", and "the" include plural referents unless the context clearly dictates otherwise.

Fig. 1 is a schematic diagram illustrating an exploded structural view of a waterproof camera case 10, according to an exemplary embodiment. Referring to Fig. 1, waterproof camera case 10 includes a front housing section 20 and a rear housing section 25. Front housing section 20 and rear housing section 25 are adapted to mate in complementary fashion to form a watertight enclosure for accommodating one or more cameras. Front housing section 20 and rear housing section 25 may be injection molded of an optically clear engineering plastic such as acrylic or polycarbonate.

Front housing section 20 includes an opening for coupling with a ring structure 17. Ring structure 17 may be die cast using the same optically clear engineering plastic that forms housing sections 20, 25. Ring structure 17 may be substantially aligned with the lens of a camera when the camera is secured within waterproof camera case 10. Moreover, a lens window 18 is attached to ring structure 17 by seal 19. Seal 19 may be any water tight sealant that can glue ring structure 17 and lens window 18, such as 3M industrial sealant (*see, e.g*., http://solutions.3m.com/wps/portal/3M/en_US/Adhesives/Tapes/Products /∼/3M-Tapes-3M-Adhesives/Adhesive-Sealants?N=5510818&rt=r3). Lens window 18 is glued to a side of ring structure 17 remote from front housing section 20.

Front housing section 20 and rear housing section 25 are mated with an intervening watertight O-ring 24. O-ring 24 may be glued to one of front housing section 20 and rear housing section 25 by a seal 23. Seal 23 is similar to seal 19. Moreover, the edges of front housing section 20 and rear housing section 25 may have one or more sets of pinholes. Each set of pinholes may be aligned in a straight line when front housing section 20 and rear housing section 25 are coupled with each other through O-ring 24. A shaft, such as shafts 21 and 22, may be inserted through a set of aligned pinholes to secure the coupling of front housing section 20 and rear housing section 25.

Waterproof camera case 10 also includes a latch assembly attached to front housing section 20. The latch assembly is configured to clamp shut front housing section 20 against rear housing section 25 by compressing intervening O-ring 24 to provide a seal between front housing section 20 against rear housing section 25. The latch assembly includes a latch 11, a lever 12, a plug 13, a spring 14, and a shaft 15. Latch 11 and lever 12 are pivotally connected to each other through shaft 15. Plug 13 and spring 14 are disposed along shaft 15. Latch 11 is configured to grip a rim partially surrounding rear housing section 25. Lever 12 is configured to rotate about shaft 21. Lever 12 may be rotated to lock the front housing section 20 and rear housing section 25 in their coupled closed position and to release the front housing section 20 and rear housing section 25 for opening.

Waterproof camera case 10 also includes a cantilevered tab 26 protruding from the outer surface of front housing section 20. Tab 26 has an opening in its central region. When lever 12 is closed, plug 13 moves close to tab 26 and spring 14 pushes plug 13 into the opening of tab 26. This way, plug 13 locks the latch assembly. When lever 12 needs to be opened, a user may push plug 13 against spring 14 to slide plug 13 out of the opening of tab 26, such that lever 12 becomes rotatable about pin 21. From the above description, it can be seen that the combination of plug 13 and spring 14 can secure the latch assembly at its closed position, so as to prevent the latch assembly from being disturbed by water pressure or other impacts to waterproof camera case 10. This way, waterproof camera case 10 can reliably work in rough conditions for extended time. For example, waterproof camera case 10 can be used 40 meters or more than 40 meters underwater, without having water leakage.

In some embodiments, waterproof camera case 10 also includes a push button assembly. The push button assembly includes a push button 16A integrally molded with a shaft. An O-ring 16B is located along the shaft. O-ring 16B is placed in annular grooves provided in the bottom of a raised pedestal integrally molded into front housing section 20.

Consistent with the disclosed embodiments, waterproof camera case 10 may be used with any type of cameras, such as sports cameras, also called action cameras. Action cameras are designed for filming actions particularly in modern sports and may allow fast and continuous capture of the actions. These cameras may be used for outdoor sports, where the device may be attached to helmets, handlebars, surfboards wrists or other body parts of the player to record the actions. When used in combination with waterproof camera case 10, the action cameras can be used underwater.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact constructions that are described above and illustrated in the accompanying drawings, and that various modifications and changes can be made without departing from the scope thereof. It is intended that the scope of the invention should only be limited by the appended claims.

## Claims

1. A camera case, comprising:
a first housing section including a tab protruding from an outer surface of the first housing section, the tab including an opening;
a second housing section, at least one of the first and second housing sections including a transparent window for transmitting light to a camera; and
a latch assembly configured to couple the first housing section with the second housing section to form a watertight enclosure for a camera, the latch assembly including a shaft, a plug, and a spring, wherein:
the plug and the spring are placed along the shaft; and
when the latch assembly is closed, the spring pushes the plug into the opening of the tab, to lock the latch assembly.

2. The camera case of claim 1, wherein the latch assembly further includes:
a latch; and
a lever pivotally connected to the latch via the shaft.

3. The camera case of claim 2, wherein the latch is configured to grip a rim of at least one of the first housing section or the second housing section.

4. The camera case of any of the preceding claims, wherein the latch assembly is mounted on the first housing section.

5. The camera case of any of the preceding claims further comprising an O-ring attached to one of the first housing section or the second housing section, wherein when the latch assembly is closed, the latch assembly compresses the O-ring to form a seal between the first housing section and the second housing section.
